**Europäisches Patentamt**

**European Patent Office**

**Office européen des brevets**

(11) Numéro de publication : **0 465 395 A1**

# (12) DEMANDE DE BREVET EUROPEEN

(21) Numéro de dépôt : **91460037.4**

(22) Date de dépôt : **01.07.91**

(51) Int. Cl.⁵ : **G06F 15/24,** G06K 17/00, G06K 19/063, G06K 7/10

(30) Priorité : **03.07.90 FR 9008585**

(43) Date de publication de la demande :
**08.01.92 Bulletin 92/02**

(84) Etats contractants désignés :
**AT BE CH DE ES GB IT LI LU NL**

(71) Demandeur : **J. BALAN SA**
**Z.I. Route de Quévert, B.P. 262**
**F-22105 Dinan Cédex (FR)**

(72) Inventeur : **Bonnenfant, Frank**
**La Ville es Nonais**
**F-35430 Châteauneuf d'Ille et Vilaine (FR)**

(74) Mandataire : **Le Guen, Louis François**
**CABINET Louis LE GUEN 38, rue Levavasseur**
**B.P. 91**
**F-35802 Dinard Cédex (FR)**

(54) **Dispositif de lecture de cartes.**

(57)    L'invention concerne un dispositif de cartes perforées, notamment, de cartes perforées utilisées, dans les officines, par les pharmaciens pour commander à un centre d'approvisionnement les médicaments dont ils ont besoin. Il est relié à un système de gestion d'officines composé d'une unité centrale (10), d'un clavier (12), d'un moniteur (11) et d'un modem (13). Il est branché, par une ligne (20), au port de l'unité centrale (10) normalement affecté au clavier (12) et, par une ligne (19), au clavier (12).
    Application : approvisionnement et gestion d'une officine.

FIG. 2

EP 0 465 395 A1

Jouve, 18, rue Saint-Denis, 75001 PARIS

L'invention concerne un dispositif de lecture de cartes perforées, notamment, de cartes perforées utilisées, dans les officines, par les pharmaciens pour commander à un centre d'approvisionnement les médicaments dont ils ont besoin.

Généralement, dans une officine, pour commander un médicament, le pharmacien se sert de "mini-cartes" qui portent le nom de "cartes de type Fahrenberger R". Il prend les cartes qu'il introduit dans la fente d'un appareil de lecture approprié. Celui-ci lit le code d'identification pharmaceutique, dit "code CIP", inscrit sous forme de perforations sur la carte. Le pharmacien dispose d'un clavier sur lequel il frappe le nombre de boîtes du médicament qu'il désire commander. L'appareil stocke le code lu et le nombre entré au clavier dans une mémoire. Le pharmacien recommence cette opération pour tous les médicaments dont il veut passer la commande.

Il existe des mini-cartes où est inscrit un code d'identification d'officine et d'autres où est codée une quantité de produits à commander (pour les traitements par lots). Après lecture de ces différentes cartes, l'appareil dispose dans sa mémoire de suffisamment d'informations pour passer la commande "automatiquement" auprès du centre d'approvisionnement dont dépend la pharmacie. On entend par "automatiquement" le fait que ces informations sont transmises au centre d'approvisionnement, au fur et à mesure qu'elles sont lues dans la mémoire de l'appareil de lecture et ce sous une forme telle et dans un ordre tel que le centre puisse être en mesure de décoder ces informations et d'enregistrer la commande. Ces informations sont généralement transmises sur le réseau téléphonique commuté.

Un appareil de ce type est mentionné dans le document FR-A-2 485 770 où, par ailleurs, est décrite la structure d'une mini-carte d'officine.

L'utilisation de ces appareils de lecture connus demande une manipulation non négligeable compte tenu du nombre de médicaments vendus dont le stock est à renouveler fréquemment. Elle est souvent source d'erreurs et demande, en conséquence, un suivi attentif.

Par ailleurs, vu le nombre de médicaments existants à l'heure actuelle et le nombre toujours croissant qui est vendu, le pharmacien dispose, en général, d'un système de gestion qui facilite la gestion de son officine et, en particulier, la gestion de ses stocks de médicaments. Des systèmes plus ou moins complexes sont actuellement disponibles sur le marché. Ils utilisent tous un clavier sur lequel le pharmacien frappe le code du médicament qu'il vend pour l'établissement de la facturation au client et pour sa comptabilité. Cette opération peut être elle aussi une source d'erreurs, mais il est vrai que la tendance actuelle a partiellement remédié à ce problème en utilisant la lecture de codes imprimés sur la boîte de médicaments sous la forme d'un code à barres.

L'ordinateur peut, par ailleurs, gérer les stocks de médicaments et, dans ce cas, décrémenter la valeur du stock du médicament vendu. Une fois une valeur de seuil inférieur dépassée, l'ordinateur peut émettre un message pour que le pharmacien puisse commander le médicament en question. Cette opération est généralement effectuée en utilisant le dispositif décrit ci-dessus qui présente, comme on l'a vu, ses inconvénients.

Le pharmacien dispose donc, à l'heure actuelle de deux machines complètement indépendantes qui demandent, chacune, des manipulations importantes en nombre et qui sont, bien souvent, sources d'erreur.

Le but de l'invention est de pallier ces inconvénients et donc de prévoir un dispositif de lecture de cartes qui soit adaptable sur un système de gestion de stocks, de manière que ces cartes puissent servir, d'une part, à la gestion des stocks de médicaments d'une officine et, d'autre part, à la commande des médicaments dont le stock est en dessous d'un seuil inférieur.

On pourrait imaginer un appareil de lecture de cartes qui se place à côté du système de gestion et qui est relié à un port d'entrée/sortie du système. Cette solution présente cependant l'inconvénient de mobiliser un port qui, s'il était libre, pourrait servir à connecter un périphérique supplémentaire tel qu'une imprimante, etc. Un autre inconvénient réside dans le coût relativement élevé d'un tel dispositif car il nécessiterait une alimentation indépendante avec un transformateur qui, par ailleurs, est lourd et encombrant.

Un autre but de l'invention est donc de prévoir un dispositif de lecture de cartes quine mobilise pas un port supplémentaire du système et quine nécessite pas d'alimentation séparée afin de ne pas grever son colt de fabrication.

A cet effet, l'invention concerne un dispositif de lecture de cartes, notamment de cartes sur lesquelles est inscrit, sous forme de perforations, un code à lire, pouvant être adapté sur un système de gestion comprenant au moins une unité centrale, un clavier, un moniteur et un modem.

Selon une caractéristique de l'invention, il est relié, d'une part, par une première ligne, au port de l'unité centrale qui est normalement affecté au clavier, et, d'autre part, par une seconde ligne, audit clavier, chaque ligne comportant au moins un fil de données sur lequel sont transmis les données, un fil d'alimentation porté à un potentiel positif et un fil de masse porté à un potentiel de référence, les fils de données des deux lignes étant respectivement reliés aux deux bornes d'un contact d'un interrupteur commandé, les fils d'alimentation et les fils de masse des deux lignes étant reliés ensemble, ledit dispositif comprenant encore une unité de commande alimentée par le fil d'alimentation et le fil de masse de la première ligne et reliée à l'entrée de commande de l'interrupteur commandé et, via un circuit tampon, au fil de données de la première ligne, ladite unité comportant une sortie et une entrée respectivement reliées à l'entrée et à la sortie d'une unité de lecture dans laquelle on peut introduire une carte et qui, après introduction de ladite carte, sous le contrôle de signaux fournis sur son entrée par l'unité de commande, donne en sortie un signal représentatif du code inscrit sur la carte, ladite unité de commande, après l'introduction d'une carte, recevant le signal issu de l'unité de lecture, commandant l'interrupteur pour ouvrir son contact, transmettant à l'unité centrale du système la valeur dudit code et commandant de nouveau l'interrupteur pour refermer son contact.

Ainsi, le dispositif utilise, pour transmettre les données du code qu'il a lues sur la carte, la ligne qui est normalement utilisée par le clavier. Quand il n'a pas de codes à transmettre, la liaison unité centrale-clavier est assurée normalement et lorsqu'il a une donnée à transmettre, il interrompt momentanément cette liaison. L'avantage que procure cet arrangement est une simplification de la circuiterie qui résulte, entre autre, du fait que l'alimentation des circuits du dispositif est effectuée par la ligne clavier-unité centrale.

Selon une autre caractéristique de l'invention, l'unité de commande et l'unité de lecture sont dans un boîtier fixé, de manière amovible, sur le clavier du système de gestion, ledit boîtier comportant une fente par laquelle peut être introduite une carte, ladite unité de lecture se trouvant sous la fente.

Ainsi, le dispositif de lecture, une fois fixé, forme avec le clavier une seule unité de saisie.

Selon une autre caractéristique de l'invention, l'unité de lecture comprend une rangée de huit émetteurs de lumière et une rangée de huit détecteurs de lumière arrangées de manière que chaque détecteur fait face à un seul émetteur pour former un couple, une carte passant, lors de son introduction dans ladite unité, entre les émetteurs et les détecteurs, l'emplacement de chaque couple étant prévu pour que les perforations de ladite carte passent devant un seul couple, les quatre premiers émetteurs dans la rangée d'émetteurs et les quatre émetteurs suivants dans ladite rangée étant respectivement reliés ensemble à quatre sorties de l'unité de commande, les quatre premiers détecteurs dans la rangée de détecteurs étant respectivement reliés aux entrées d'une première porte dont la sortie est reliée à une première entrée de l'unité de commande et les quatre détecteurs suivants étant respectivement reliés aux entrées d'une seconde porte dont la sortie est reliée à une seconde entrée de l'unité de commande.

Cet arrangement particulier de l'unité de lecture permet d'effectuer la lecture d'un couple à la fois, tout en minimisant le nombre de sorties et d'entrées occupées sur l'unité de commande.

Selon une autre caractéristique de l'invention, l'interrupteur commandé comporte un second contact aux bornes duquel sont reliés des fils d'horloge des lignes, l'unité de commande commandant l'ouverture dudit contact lors de la transmission d'une donnée à l'unité centrale du système, le fil d'horloge de la première ligne étant relié, via le circuit tampon, à une sortie de l'unité de commande.

Ainsi, il est possible de transmettre les données à l'unité centrale du système dans le même mode que celui qui est normalement utilisé par le clavier.

Selon une autre caractéristique de l'invention, le fil d'horloge de la seconde ligne est relié à une entrée d'interruption de l'unité de commande ainsi que, via le circuit tampon, à une sortie de l'unité de commande et le fil de données de la seconde ligne est relié à une troisième entrée de l'unité de commande ainsi que, via le circuit tampon, à une sortie de l'unité de commande.

Ainsi, le dispositif peut émettre des données vers le clavier mais aussi recevoir des données de celui-ci. On verra, dans la description qui suit, que cette caractéristique permet d'initialiser le dispositif de lecture en interrogeant le clavier sur sa configuration.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 montre, de face, une carte telle que celle qui peut être lue par un dispositif selon l'invention,

la Fig. 2 est une vue d'un système de gestion d'officine qui est équipé d'un dispositif de lecture de cartes selon l'invention, et

la Fig. 3 est un schéma synoptique électrique d'un dispositif de lecture de cartes selon l'invention.

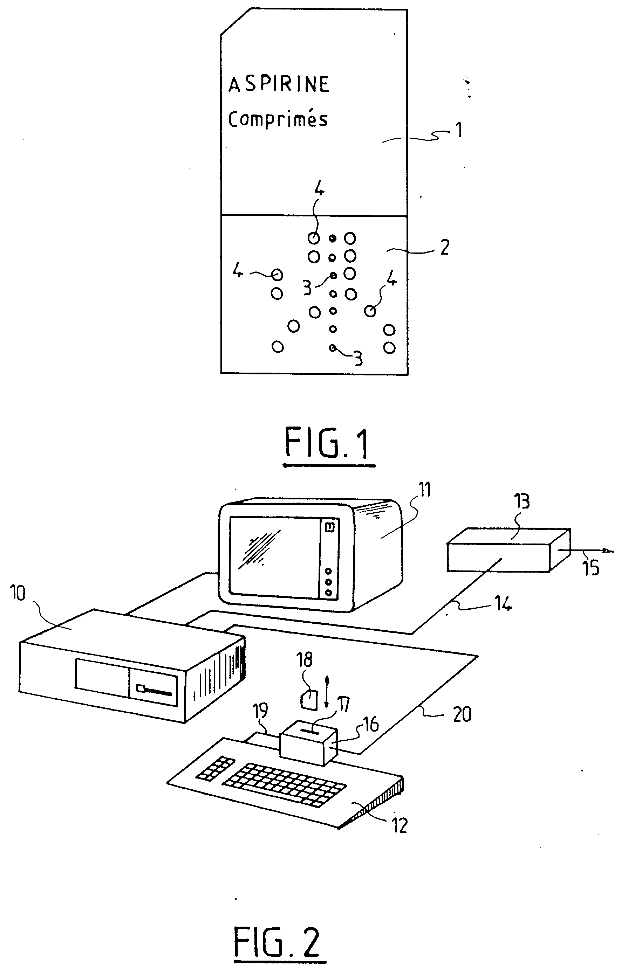

La carte de la Fig. 1 est sensiblement rectangulaire et est constituée d'une première zone 1 où sont, par exemple, imprimés le nom, le dosage, la forme et le conditionnement du médicament auquel elle correspond et une seconde zone 2 où est incrit, sous forme de perforations 3 et 4, le code de ce médicament. Ce code est communément appelé code C.I.P. Les perforations 3 et 4 sont disposées en 7 lignes, chaque ligne comportant un trou 3 de faible diamètre décalé sur la droite par rapport à l'axe médian de la carte. De part et d'autre du trou 3, on trouve deux trous 4 de diamètre plus important qui, selon le chiffre du code de la ligne, peuvent prendre, chacun, trois positions. Les six lignes inférieures portent les six chiffres du code C.I.P. La ligne supérieure porte un chiffre qui se déduit des six autres du code et qui sert de contrôle du code C.I.P. Dans une ligne, pour coder les dix chiffres 0 à 9, un chiffre doit être codé différemment des autres. C'est le zéro qui est codé avec un seul gros trou 4.

Le système de gestion représenté à la Fig. 2 est composé d'une unité centrale de commande 10 à laquelle sont raccordés un moniteur 11, un clavier 12 et un modem 13.

Dans la description qui suit, il est supposé que l'unité centrale 10 est un micro-ordinateur du type "Compatible PC" ou du type "PS" et que le clavier 12 est du type prévu pour s'adapter sur ces machines. Bien sûr, l'invention ne se limite pas à ce type de machine.

Le modem 13 échange, par une ligne 14, des données et des codes de commande avec l'unité centrale 10 et émet ou reçoit des données sur une ligne 15 reliée au réseau téléphonique commuté.

Un dispositif 16 de lecture de cartes du type de celle montrée à la Fig. 1 est fixé, de manière amovible, sur le clavier 12. Il est pourvu, sur sa face supérieure, d'uns fente 17 par laquelle on peut introduire une carte 18. Il est raccordé, par une ligne 19, à la sortie du clavier 12 et, par une ligne 20, à l'unité centrale 10, et, plus exactement, au port de l'unité centrale 10 qui est normalement affecté au clavier 12.

Le principe de fonctionnement du dispositif de lecture est le suivant: tant qu'aucune carte 18 n'est introduite dans le dispositif de lecture 16, le clavier 12 peut envoyer normalement ses données à l'unité centrale 10 où elles sont traitées selon des programmes enregistrés dans la mémoire de programme de l'unité centrale 10. Le dispositif 16 est, en quelque sorte, shunté. A l'introduction d'une carte 18 dans le dispositif 16, celui-ci lit son code C.I.P (de la manière qui sera explicitée ci-dessous) et code la donnée lue en des signaux compatibles avec ceux normalement émis, sur la ligne 20, par le clavier 12. Le dispositif de lecture 16 se substitue alors, pour l'émission de ses données vers l'unité centrale 10, au clavier 12. L'unité centrale 10 les reçoit et les traite selon des programmes stockés dans sa mémoire de programme.

Le système représenté à la Fig. 2 peut être utilisé comme suit. Au moment où il vend un médicament, le pharmacien introduit la carte correspondant à ce médicament dans le dispositif de lecture 16. Celui-ci lit le code C.I.P du médicament inscrit sur la carte 18 et le transmet à l'unité centrale 10. Si un programme de gestion de l'officine est enregistré dans la mémoire de celle-ci, l'unité centrale 10 peut décrémenter d'une unité la valeur du stock de ce médicament, valeur qu'elle stocke dans sa mémoire.

Lorsque cette valeur tombe en dessous d'une valeur seuil, l'unité centrale 10 peut en avertir, en inscrivant un message sur l'écran du moniteur 11, le pharmacien qui peut alors déclencher la procédure de commande au centre d'approvisionnement de l'officine. Pour ce faire, l'unité centrale 10 forme un message composé du nom de l'officine, du code C.I.P. du (ou des) médicament (s) à commander, le nombre de médicaments etc. et le transmet via le modem 13, la ligne 15 et le réseau téléphonique au centre d'approvisionnement.

On comprendra que les fonctions du système de la Fig. 1 dépendent essentiellement du programme ou des programmes qui sont enregistrés dans la mémoire de programme de l'unité centrale 10.

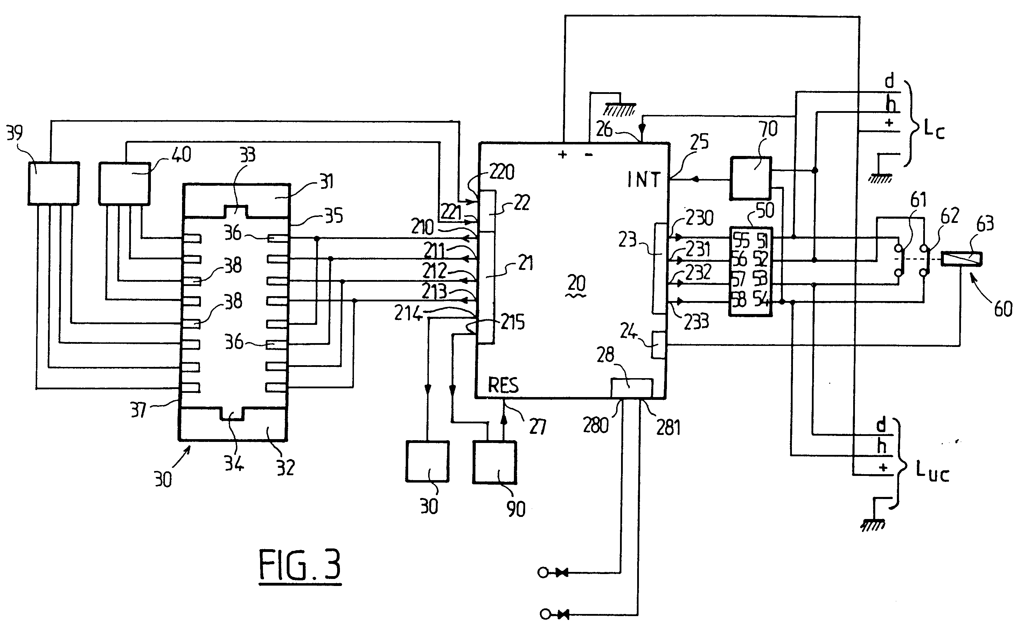

On va maintenant décrire en détail un dispositif de lecture 16 selon l'invention et tel qu'il est représenté à la Fig. 3. Il comprend essentiellement une unité de commande 20 et une unité de lecture de carte 30.

L'unité de commande 30 est une unité préprogrammée du type microprocesseur ou microcontrôleur. Les organes annexes nécessaires à son fonctionnement, tels que les mémoires, horloges etc. ne sont pas représentés pour ne pas alourdir inutilement la Fig. 3. Ils sont, par ailleurs, d'une mise en oeuvre connue par l'homme de métier.

L'unité de lecture 30 est constituée de deux supports 31 et 32 sensiblement parallélépipèdiques dont on ne voit sur la Fig. 3 que les bouts. Ils sont montés parallèles entre eux et leurs faces en regard l'une de l'autre sont respectivement pourvues de rainures 33 et 34 longitudinales.

Les rainures 33 et 34 sont prévues pour recevoir et guider, lors de son introduction, une carte telle que celle représentée à la Fig. 1. Pour ce faire, elles ont une largeur légèrement plus élevée que l'épaisseur d'une carte et leurs fonds sont à une distance entre eux légèrement supérieure à la largeur d'une carte. L'unité 30 est placée juste sous la fente 17 du dispositif et les fonds des rainures 33 et 34 coïncident, par leurs parties supérieures, avec les petits côtés de la fente 17.

Sur un côté de l'unité de lecture 30, reliant les faces latérales des deux supports 33 et 34, est prévu un ensemble d'émission constitué d'une plaque 35 sur laquelle est montée une rangée de huit émetteurs de lumière 36, tels que, par exemple, des diodes électroluminescentes infrarouges. De l'autre côté de l'unité de lecture 30, reliant chaque face latérale des supports 33 et 34, est prévu un ensemble de lecture constitué d'une plaque 37 sur laquelle est montée une rangée de huit détecteurs de lumière 38, tels que, par exemple, des phototransistors infrarouges. Chaque détecteur 38 fait face à un émetteur de lumière 36 et forme avec lui un couple émetteur-détecteur.

Les emplacements des couples émetteur-détecteur, par rapport aux fonds des rainures 33 et 34, correspondent aux emplacements des perforations sur une carte par rapport à ses côtés longitudinaux. En fait le couple supérieur sur la Fig. 3, est prévu pour détecter la présence d'une carte dans l'unité de lecture et le cinquième, en partant du couple supérieur, est prévu pour détecter, lors de l'introduction de la carte, ses petits trous 3. Les second, troisième et quatrième couples sont prévus pour détecter les gros trous 4 d'un côté de la colonne de petits trous 3 et les sixième, septième et huitième couples sont prévus pour détecter les gros trous 4 de l'autre côté de la colonne de petits trous 3. Par ailleurs, lorsque la carte est complètement introduite dans le dispositif de lecture de l'invention, toutes les lignes sont passées entre les rangées d'émetteurs et de détecteurs.

Electriquement, les premier et cinquième émetteurs 36, les seconds et sixième émetteurs 36, les troisième et septième émetteurs 36 et les quatrième et huitième émetteurs 36 sont respectivement reliés ensemble aux quatre sorties 210 à 213 d'un port de sortie 21 de l'unité de commande 20. Les premier, second, troisième et quatrième détecteurs 38 sont respectivement reliés à quatre entrées d'une première porte 39 de type OU. Les cinquième, sixième, septième et huitième détecteurs 38 sont reliés aux quatre entrées d'une seconde porte 40 de type OU. Les sorties des deux portes 39 et 40 sont respectivement reliées aux entrées 220 et 221 d'un port d'entrée 22 de l'unité de commande 20.

Le dispositif de lecture est relié à un clavier 12 (Fig. 2) par une ligne $L_c$ (19 Fig. 2) à quatre fils et à l'unité centrale 10 par une ligne $L_{uc}$ (20 Fig. 2) également à quatre fils. Chaque ligne comporte un fil $\underline{d}$ dit "fil de données" parce que c'est par ce fil que sont transmises les données, un fil $\underline{h}$ dit "fil d'horloge" où circulent des signaux d'horloge, un fil + dit "fil d'alimentation" porté, par l'unité centrale 10 à un potentiel positif, et un fil dit "fil de masse" porté, par l'unité centrale 10, à un potentiel de référence égal à celui de sa masse électrique. Les fils d'alimentation + des deux lignes $L_c$ et $L_{uc}$ sont reliés à la borne d'alimentation + de l'unité de commande 20. Le fil de masse est branché à la masse électrique du dispositif de lecture. On remarquera que la borne d'alimentation négative - de l'unité de commande 20 est également reliée à la masse électrique.

Les fils de données $\underline{d}$ et d'horloge $\underline{h}$ de la ligne $L_c$ ainsi que les fils de données $\underline{d}$ et d'horloge $\underline{h}$ sont respectivement reliés à des bornes 51 à 54 d'un circuit d'isolement 50. A ces bornes 51 à 54 correspondent respectivement des bornes 55 à 58, elles-mêmes respectivement reliées aux bornes 230 à 233 d'un port de sortie 23 de l'unité de commande 20.

Lorsque l'une des bornes 55 à 58 du circuit 50 est activée par l'unité de commande 20 au moyen de son port 23, la borne 51 à 54 correspondante est positionnée à un niveau logique bas. Par contre, si l'une des bornes 55 à 58 n'est pas activée, la borne 51 à 54 correspondante présente un état de haute impédance.

Les fils de données $\underline{d}$ des deux lignes $L_c$ et $L_{uc}$ sont respectivement reliés aux deux bornes d'un premier contact de travail 61 d'un relais 60 et les fils d'horloge $\underline{h}$ des deux lignes $L_c$ et $L_{uc}$ sont respectivement reliés aux deux bornes d'un second contact de travail 62 du relais 60. Celui-ci a sa bobine d'excitation 63 qui est reliée, électriquement, à une sortie de commande 24 de l'unité de commande 20.

Les fils d'horloge $\underline{d}$ des deux lignes $L_c$ et $L_{uc}$ sont respectivement reliés aux deux bornes d'entrée d'un circuit logique 70 du type OU dont la sortie est reliée à une entrée 25 de commande d'interruption INT de l'unité de commande 20. Le fil de données $\underline{d}$ de la ligne $L_c$ est directement relié à une entrée 26 de l'unité de commande 20.

Un dispositif avertisseur sonore 80 a son entrée de commande reliée à la sortie 214 du port de sortie 21.

Un dispositif 90, appelé dans le domaine de la technique ici considéré, "chien de garde", a son entrée qui est reliée à la sortie 215 du port 21 de l'unité de commande 20 et a sa sortie reliée à une entrée 27 de remise à zéro RES. Ce circuit est bien connu de l'homme de la technique et son fonctionnement ne sera pas expliqué ici. Mentionnons, cependant, qu'il permet de remettre l'unité de commande 20 à zéro lorsque n'est pas apparues d'impulsions, à son entrée, pendant un certain temps donné. Ces impulsions sont fournies périodiquement par l'unité de commande 20, sur sa sortie 215.

L'unité de commande 20 est également pourvue d'un port d'entrée/sortie 28 dont les deux bornes de sortie 280 et 281 peuvent recevoir deux lignes bidirectionnelles au bout desquelles sont, par exemple, branchés une imprimante, un stylo optique, etc.

Le fonctionnement d'un dispositif de lecture selon l'invention est déterminé par des programmes qui sont stockés, sous forme de codes, dans une mémoire de programme de l'unité de commande 10. On ne décrira ici que le principe de fonctionnement dans ses deux fonctions essentielles: l'introduction et la lecture d'une carte, d'une part, et l'émission vers l'unité centrale ou vers le clavier ou la réception de données, d'autre part.

Auparavant, pour la bonne compréhension du fonctionnement, nous rappelons, brièvement, le principe de la transmission entre clavier et unité centrale de la plupart des micro-ordinateurs de type "PC compatibles" ou "PS". Le transfert de données unité centrale-clavier ou clavier-unité centrale s'effectue en mode série, c'est-à-dire que les bits d'un multiplet de données sont envoyés un à un sur le fil de données $\underline{d}$ de la liaison. En même temps qu'un bit est envoyé sur le fil de données $\underline{d}$, une impulsion d'horloge apparaît sur le fil d'horloge $\underline{h}$ de la liaison. Cette impulsion est engendrée par l'émetteur de données, c'est-à-dire soit par le clavier 12 soit par l'unité centrale 10.

Dès la mise sous tension du système, le clavier 12 effectue une procédure interne de contrôle de ses propres mémoires et, celle-ci terminée, il envoie, de la manière exposée ci-dessus, un octet à l'unité centrale 10 lui indiquant qu'il est prêt à fonctionner. Puis, l'unité centrale 10 envoie une suite d'octets correspondant à des instructions de configuration du clavier 12. En particulier, selon le type de l'unité centrale, celle-ci imposera au clavier 12 une table de conversion donnée dans laquelle à une touche donnée du clavier correspond un octet à transmettre.

Une fois la configuration du clavier 12 effectuée, celui-ci est prêt à fonctionner normalement. A l'appui sur une touche, il transmet l'octet de celle-ci qui correspond dans la table de conversion.

Le dispositif de lecture, après cette première phase de configuration du clavier 12, doit déterminer le type de l'unité centrale 10 du système afin de déterminer une table de conversion semblable à celle qui est utilisée par le clavier 12. Pour ce faire, il transmet au clavier 12 un octet correspondant à une instruction de demande de configuration. En réponse à cet octet, le clavier 12 transmet un octet significatif de la table de conversion qu'il utilise. Ce dernier octet est ensuite lu par l'unité de commande 10 du dispositif de lecture 16.

Nous décrivons, maintenant, en détail cette suite d'opérations. Le circuit 50 a, au repos, ses bornes de sortie 51 à 54 qui sont en haute impédance. La liaison entre les lignes $L_c$ et $L_{uc}$ est réalisée par les contacts 61 et 62. L'unité de commande 20 commande alors la bobine 63 du relais 60 pour que ses contacts 61 et 62 s'ouvrent et que la liaison clavier-unité centrale, soit coupée. Puis, il commande, par son port de sortie 23, le circuit d'isolement 50 afin que celui-ci établisse, comme déjà expliqué ci-dessus, sur le fil de données $\underline{d}$ de la ligne $L_c$ une suite de niveaux de tension correspondant à la transmission en série d'un octet et sur le fil d'horloge $\underline{h}$ de la ligne $L_c$ une suite d'impulsions en même temps que les bits sont transmis sur le fil $\underline{d}$. Il se met ensuite en attente de signaux de données en provenance du clavier 12.

Les impulsions envoyées par le clavier 12 reçues sur le fil d'horloge $\underline{h}$ de la ligne $L_c$ sont transmises, via le circuit 70, à l'entrée d'interruption 25 de l'unité de commande 20. A chaque impulsion sur l'entrée 25, l'unité de commande 20 interrompt le programme en cours et effectue la lecture du niveau de tension présent sur sa borne 26, celle-ci étant reliée au fil de données $\underline{d}$ de la ligne $L_c$, et en déduit la valeur du bit transmis à ce moment. Une fois la transmission achevée, l'unité de commande reconstitue, à partir des bits qu'elle a reçus et lus, l'octet envoyé. Cet octet est représentatif de la table de conversion utilisée par le clavier 12.

Dès lors, l'unité de commande pourra, lorsqu'elle envoie une donnée à l'unité centrale, utiliser la même table de conversion que celle utilisée par le clavier 12 et cette donnée sera, par conséquent, correctement interprétée par l'unité centrale du système.

L'unité de commande du dispositif est maintenant en attente de l'introduction d'une carte.

Lorsqu'aucun détecteur 38 ne reçoit de lumière, leurs tensions de sortie est à un premier niveau et la tension de sortie des deux portes 39 et 40 est également à ce premier niveau. Si un des détecteurs 38 d'une des deux séries de quatre détecteurs reçoit de la lumière de la part de l'émetteur 36 qui se trouve en face de lui, sa tension de sortie ainsi que la tension de sortie de la porte correspondante passent à un second niveau.

Après initialisation, l'unité de commande 20 du dispositif de lecture commande l'excitation des premier et cinquième émetteurs 36 reliés à la sortie 210 du port 21. Les deux détecteurs 38 correspondant sont excités et donnent en sortie une tension du second niveau mentionné ci-dessus si bien que les tensions sur les deux bornes 220 et 221 du port d'entrée 22 sont également à ce second niveau.

L'unité de commande 20 lit la valeur de cette tension sur l'entrée 221 du port 22 si bien qu'en fait elle ne contrôle que le premier couple émetteur-détecteur de l'unité de lecture 30. Lorsqu'une carte est introduite, le faisceau de lumière du premier émetteur 36 n'atteint plus le premier détecteur 38. La tension de sortie de celui-ci ainsi que la tension sur la borne 221 passent au premier niveau.

L'unité de commande 20 effectue alors la lecture des codes inscrits sur la carte au fur et à mesure qu'elle est introduite dans l'unité de lecture 30 et que les lignes du code C.I.P. passent devant les émetteurs 36 et les détecteurs 38. Lorsque le petit trou de la carte passe devant le cinquième couple, une tension d'un second niveau apparaît sur la borne 220 de l'unité de commande 20. Celle-ci déclenche alors un processus de lecture d'une ligne de code C.I.P.

Ce processus consiste à exciter les second et sixième émetteurs 36 puis à analyser les niveaux de tension sur les bornes 220 et 221 du port 22. Puis à recommencer, en excitant les troisième et septième émetteurs 36 et, enfin, les quatrième et huitième émetteurs 36. On comprendra que, des analyses effectuées, on puisse en déduire la position des perforations sur la carte et, de là, le chiffre codé sur la ligne analysée.

A chaque ligne, telle que détectée par le cinquième couple, on recommence la lecture de la ligne de la manière précédemment décrite.

Une fois les huit chiffres lus, l'unité de commande 20 reconstruit, au moyen des sept premiers, le code C.I.P. de la carte lue et, avec le huitième, vérifie que la lecture a été correcte.

Eventuellement, une seconde lecture de vérification est effectuée lorsque la carte est retirée.

Une fois la lecture de la carte achevée, l'unité de commande 20 transmet ce code C.I.P. à l'unité centrale du système sous forme d'un code qu'elle établit au moyen de la table de conversion. Au chiffre lu dans une ligne de la carte, correspond une valeur de code à transmettre. Puis elle commande la bobine 63 du relais 60 afin que ses contacts 61 et 62 s'ouvrent et que la liaison clavier-unité centrale soit interrompue. Elle commande, par son port de sortie 23, le circuit d'isolement 50 afin que celui-ci établisse sur le fil de données $\underline{d}$ de la ligne $L_{uc}$ une suite de niveaux de tension correspondant à la transmission en série des octets du code C.I.P. convertis et, sur le fil d'horloge $\underline{h}$, une suite d'impulsions en même temps que les bits sont transmis.

La transmission terminée, l'unité de commande recommande le relais 60 pour que ses contacts 61 et 62 se ferment et que la liaison clavier-unité centrale soit rétablie. Elle commande le dispositif avertisseur 80 pour signaler à l'opérateur que la lecture s'est effectuée correctement. Puis elle se met de nouveau en attente de l'introduction d'une carte.

## Revendications

**1)** Dispositif de lecture de cartes, notamment de cartes sur lesquelles est inscrit, sous forme de perforations, un code à lire, pouvant être adapté sur un système de gestion comprenant au moins une unité centrale (10), un clavier (12), un moniteur (11) et un modem (13), caractérisé en ce qu'il est relié, d'une part, par une première ligne (20, $L_{uc}$), au port de l'unité centrale (10) qui est normalement affecté au clavier (12) et, d'autre part, par une seconde ligne (19, $L_c$), audit clavier (12), chaque ligne ($L_{uc}$, $L_c$) comportant au moins un fil de données $\underline{d}$ sur lequel sont transmis les données, un fil d'alimentation + porté à un potentiel positif et un fil de masse porté à un potentiel de référence, les fils de données $\underline{d}$ des deux lignes ($L_{uc}$, $L_c$) étant respectivement reliés aux deux bornes d'un contact (61) d'un interrupteur commandé (60), les fils d'alimentation des deux lignes ($L_{uc}$ et $L_c$) étant reliés ensemble et les fils de masse étant reliés ensemble, ledit dispositif comprenant encore une unité de commande (20) alimentée par le fil d'alimentation + et le fil de masse - de la première ligne (20, $L_{uc}$) et reliée à l'entrée de commande de l'interrupteur commandé (60) et, via un circuit tampon (50) et par un sortie (232), au fil de données $\underline{d}$ de la première ligne (20, $L_{uc}$), ladite unité comportant une sortie (21) et une entrée (22) respectivement reliées à l'entrée et à la sortie d'une unité de lecture (30) dans laquelle on peut introduire une carte et qui, après introduction de ladite carte, sous le contrôle de signaux fournis sur son entrée par l'unité de commande (20), donne en sortie un signal représentatif du code inscrit sur ladite carte, ladite unité de commande (20), après lecture de la carte par l'unité de lecture (30) recevant le signal issu de ladite unité (30), commandant l'interrupteur (60) pour ouvrir son contact (61), transmettant à l'unité centrale (10) du système la valeur dudit code et commandant de nouveau l'interrupteur (60) pour refermer son contact (61).

**2)** Dispositif de lecture selon la revendication 1, caractérisé en ce que l'unité de commande (20) et l'unité de lecture (30) sont dans un boîtier (16) fixé, de manière amovible, sur le clavier (12) du système de gestion, ledit boîtier (16) comportant une fente (17) par laquelle peut être introduite une carte (18), ladite unité de lecture (30) se trouvant sous la fente (17).

**3)** Dispositif de lecture selon la revendication 1 ou 2, caractérisé en ce que l'unité de lecture (30) comprend une rangée de huit émetteurs de lumière (36) et une rangée de huit détecteurs de lumière (38) arrangées de manière que chaque détecteur (38) fait face à un seul émetteur (36) pour former un couple, une carte passant, lors de son introduction dans ladite unité (30), entre les émetteurs (36) et les détecteurs (38), l'emplacement de chaque couple étant prévu pour que les perforations de ladite carte passent devant un seul couple, les quatre premiers émetteurs (36) dans la rangée d'émetteurs et les quatre émetteurs (36) suivants dans ladite rangée étant respectivement reliés ensemble à quatre sorties (210 à 213) de l'unité de commande (20), les quatre premiers détecteurs (38) dans la rangée de détecteurs étant respectivement reliés aux entrées d'une première porte (40) dont la sortie est reliée à une première entrée (221) de l'unité de commande (20) et les quatre détecteurs (38) suivants dans la rangée d'émetteurs étant respectivement reliés aux quatre entrées d'une seconde porte (39) dont la sortie est reliée à une seconde entrée (220) de l'unité de commande (20).

**4)** Dispositif selon une des revendications précédentes, caractérisé en ce que l'interrupteur commandé (60) comporte un second contact (62) aux bornes duquel sont reliés des fils d'horloge $\underline{h}$ des lignes ($L_{uc}$, $L_c$), l'unité de commande (20) commandant l'ouverture dudit contact (62) lors de la transmission d'une donnée à l'unité centrale (10) du système, le fil d'horloge $\underline{h}$ de la première ligne ($L_{uc}$) étant relié, via le circuit tampon (50), à une sortie (233) de l'unité de commande (20).

**5)** Dispositif selon la revendication 4, caractérisé en ce que le fil d'horloge $\underline{h}$ de la seconde ligne ($L_c$) est relié à une entrée d'interruption (25, INT) de l'unité de commande (20) ainsi que, via le circuit tampon (50), à une sortie (230) de l'unité de commande (20) et le fil de données $\underline{d}$ de la seconde ligne ($L_c$) est relié à une troisième entrée (26) de l'unité de commande (20) ainsi que, via le circuit tampon (50), à une sortie (230) de l'unité de commande (20).

ASPIRINE
Comprimés

## FIG.1

## FIG.2

FIG.3

EP 0 465 395 A1

Office européen
des brevets

# RAPPORT DE RECHERCHE EUROPEENNE

Numero de la demande

EP 91 46 0037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 510 475 (FIRMA DIPLOMVOLKSWIRT JOSEF LAUER NACHFOLGER) * revendication 1; figure 1 * --- | 1-3 | G 06 F 15/24<br>G 06 K 17/00<br>G 06 K 19/063<br>G 06 K 7/10 |
| A | FR-A-2 517 847 (DIPLOMVOLKSWIRT JOSEF LAUER NACHFOLGER) * page 4, ligne 32 - page 5, ligne 32; figure 1 * --- | 1-3 | |
| A | DE-A-3 020 004 (FAHRENBERGER ORGANISATION IN APOTHEKEN) * page 16, paragraphe 10 - page 17, paragraphe 1; figures 1,2 * --- | 1-3 | |
| D,A | FR-A-2 485 770 (BONHOURE) * revendication 5; figures 1-3 * --- | 1-3 | |
| A | HEWLETT-PACKARD JOURNAL vol. 38, no. 6, juin 1987, pages 8-12, Palo Alto, CA, US; R.S. STARR et al.: "The Hewlett-Packard Human Interface Link" * page 8, paragraphes 1-6; figure 1 * ----- | 1 | |

DOMAINES TECHNIQUES RECHERCHES (Int. Cl.5)

G 06 F 7/00
G 06 F 15/00
G 06 K 7/00
G 06 K 13/00
G 06 K 17/00
G 06 K 19/00

Le présent rapport a été établi pour toutes les revendications

| Lieu de la recherche | Date d'achèvement de la recherche | Examinateur |
|---|---|---|
| BERLIN | 02-09-1991 | DUCREAU F B |

EPO FORM 1503 03.82 (P0402)